(19) Europäisches Patentamt
European Patent Office
Office européen des brevets

(11) **EP 4 644 942 A1**

(12) **EUROPEAN PATENT APPLICATION**

(43) Date of publication:
**05.11.2025 Bulletin 2025/45**

(21) Application number: **24275054.5**

(22) Date of filing: **02.05.2024**

(51) International Patent Classification (IPC):
**G01S 7/00** (2006.01)    **G01S 13/72** (2006.01)
**G01S 13/87** (2006.01)    **G01S 13/931** (2020.01)

(52) Cooperative Patent Classification (CPC):
**G01S 7/003; G01S 13/723; G01S 13/878;
G01S 13/931**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BAE SYSTEMS plc**
**London SW1Y 5AD (GB)**

(72) Inventor: **The designation of the inventor has not
yet been filed**

(74) Representative: **BAE SYSTEMS plc
Group IP Department
Victory Point
Frimley
Camberley, Surrey GU16 7EX (GB)**

(54) **OBJECT TRACKING**

(57)    A system, computing device and a computer-implemented method of tracking an object are disclosed. Embodiments obtain (302) a plurality of estimated states and covariances relating to a tracked object and associated with a respective plurality of tracking data sources, and process (304) the obtained plurality of estimated states and covariances using a modified Kalman filter process to generate an updated state and updated covariance. Embodiments generate (306) object tracking information using the updated state and updated covariance. The modified Kalman filter process comprises computing the updated state and the updated covariance in an update phase, wherein the computing of the updated state and the updated covariance is weighted according to relative confidence in the modified Kalman filter process and each of the plurality of tracking data sources.

FIG. 2

**Description**

FIELD OF THE INVENTION

The present invention relates to object tracking, in particular to tracking one or more object based on information processed using a Kalman filter.

BACKGROUND

The Kalman filter is an algorithm that estimates the values of measured variables over time, given measurements of the variables and the amount of uncertainty in those measurements. Kalman filters are commonly used for object tracking, typically to predict and update the location and velocity of an object based on inputs such as sensor readings.
It is desirable in some cases to mitigate the effects of intermittently missing data for the attributes of one or more sensors where there are multiple sensors of varying quality and precision, possibly with different modalities. For example, an object tracking system may integrate inputs from multiple sensors that are manufactured by different parties. Different sensors may have different tracking algorithms and opaquely produce a track (state estimate) with uncertainty. In particular, some sensors do not publish raw measurements or plots on their external interfaces. One specific example is where different RADAR-based sensors are used to provide inputs to an object tracking process based on a marine vessel, where manufacturers may not provide full details of how their sensors operate.
A technical problem faced is therefore how to combine the information that each of the sensors is providing and thus mitigate missing data from the best sensors, whilst preventing sudden deterioration in track quality when temporarily relying on lower capability sensors. A common known solution is to use only the output from the sensor providing the "highest quality" output. However, this strategy does not always provide reliable results as new data from a low quality sensor may be less useful than existing - but stale - information from a high quality sensor that is temporarily not detecting the object.

SUMMARY

Embodiments of the present invention can address one or more of the above technical problems. Embodiments may introduce a "master" Kalman filter-based process that just applies a weighted 'Kalman gain' value for each of a set of tracking data sources that perform supporting but opaque processes to the update steps of the master process. The 'Kalman gain' can be considered to be the difference between the a *priori* and a *posteriori* states, and in embodiments the update is weighted according to the relative confidence in the master process and the tracking data source processes. If there is one dominating process (or sensor) then embodiments will approximate to the known 'use best' solution of using the best or strongest process. In circumstances where no single process dominates all the time, embodiments can exploit more information (in particular, the information obtained from each of the tracking data source sensor processes rather than just the strongest/best one) to out-perform the conventional 'use best' strategy. Therefore, embodiments can provide benefits over the known strategy.
According to a first aspect of the present invention there is provided a computer-implemented method of tracking an object comprising:

obtaining a plurality of estimated states and covariances relating to a tracked object and associated with a respective plurality of tracking data sources;

processing the obtained plurality of estimated states and covariances using a modified Kalman filter process to generate an updated state and updated covariance, and

generating object tracking information using the updated state and updated covariance,

wherein the modified Kalman filter process comprises:
computing the updated state and the updated covariance in an update phase, wherein the computing of the updated state and the updated covariance is weighted according to relative confidence in the modified Kalman filter process and each of the plurality of tracking data sources.

The modified Kalman filter process may comprise an approximation of a theoretical Kalman Filter that directly processes the obtained plurality of estimated states and covariances. The modified Kalman filter process may comprise computing a Kalman gain value comprising a difference between an a *priori* state and an a posteriori/updated state for each of the plurality of tracking data sources.

The modified Kalman filter process may comprise computing a *priori* state and a *priori* covariance in a prediction phase, e.g. for each of the obtained plurality of estimated states and covariances, and a current estimated state and current covariance of the modified Kalman filter process. This computing may comprise applying a state-transition model and process noise. The state-transition model may comprise an assumption of straight-line motion (dead-reckoning).

The computing the updated state may comprise adjusting the a *priori* state based on a first term and a second term. The first term may be proportional to an adjustment between the a *priori* state and a posteriori/updated state of the obtained plurality of estimated states, and may be weighted by confidence in the obtained plurality of estimated states compared to the a *priori* state of the modified Kalman filter process. The second term may be proportional to a difference between the obtained plurality of estimated states and the a *priori* state of the modified Kalman filter process, and may be weighted by confidence in the obtained plurality of estimated states compared to the a *priori* state of the modified Kalman filter process and an additional factor relating to confidence in change from the a *priori* state to the updated state of the obtained plurality of estimated states. The computing the updated state may use an equation $\hat{x}_{k|k}^m \approx$

$$\hat{x}_{k|k-1}^m + P_{k|k-1}^m \left(P_{k|k-1}^i\right)^{-1} \left(\hat{x}_{k|k}^i - \hat{x}_{k|k-1}^i\right) + P_{k|k-1}^m \left(P_{k|k-1}^i\right)^{-1} \left(I - P_{k|k}^i \left(P_{k|k-1}^i\right)^{-1}\right) \left(\hat{x}_{k|k-1}^i - \right.$$

$$\left. \hat{x}_{k|k-1}^m\right)$$ , wherein:

$\hat{x}_{k|k-1}^m, P_{k|k-1}^m$ represent state and covariance, respectively, of the modified Kalman filter process for a *priori* estimates on a k$^{th}$ update;

$\hat{x}_{k|k}^m, P_{k|k}^m$ represent state and covariance, respectively, of the modified Kalman filter process for the a posteriori/updated estimates on the k$^{th}$ update;

$\hat{x}_{k|k-1}^i, P_{k|k-1}^i$ represent state and covariance, respectively, of each of i = 0..N tracking data sources for a *priori* estimates on the k$^{th}$ update;

$\hat{x}_{k|k}^i, P_{k|k}^i$ represent state and covariance, respectively, of each of the i = 0..N data sources for a *posteriori* estimates on the k$^{th}$ update, and

I represents an identity matrix.

The computing the updated covariance may comprise the updated covariance being computed by adjusting the a *priori* covariance of the modified Kalman filter process according to a first weight and a second weight. The first weight may relate to relative confidence between the plurality of obtained covariances and the a *priori* covariance of the modified Kalman filter process. The second weight may relate to confidence in change from an a *priori* state to the updated state of the obtained plurality of estimated states. The computing the updated covariance may use an equation

$$P_{k|k}^m \approx \left(I - P_{k|k-1}^m \left(P_{k|k-1}^i\right)^{-1} \left(I - \quad P_{k|k}^i \left(P_{k|k-1}^i\right)^{-1}\right)\right) P_{k|k-1}^m$$ .

The plurality of estimated states and covariances may be "associated with" the respective plurality of tracking data sources by being generated directly or indirectly from data output by the tracking data sources. The plurality of estimated states and covariances will normally be suitable for being processed by a Kalman filter (either by virtue of the data output being directly suitable for processing by a Kalman filter, or after the data output is further processed). In some cases at least one of the plurality of tracking data sources may not directly output the covariance. The method may comprise approximating the covariance obtained from the at least one tracking data source based on a reported or assumed error estimate of the at least one tracking data source.

According to another aspect of the present invention there is provided a computer-implemented method of generating updated state and updated covariance values, the method comprising:

obtaining a plurality of estimated states and covariances relating to a tracked object and associated with a respective plurality of tracking data sources, and

processing the obtained plurality of estimated states and covariances using a modified Kalman filter process to generate an updated state and updated covariance.

According to a general aspect of the present invention there is provided a computer-implemented method of tracking an object comprising:

obtaining a plurality of estimated states and covariances relating to a tracked object and associated with a respective plurality of tracking data sources;

processing the obtained plurality of estimated states and covariances using a modified Kalman filter process to generate an updated state and updated covariance, and

generating object tracking information using the updated state and updated covariance,

wherein the modified Kalman filter process comprises computing a Kalman gain value comprising a difference between an a *priori* state and an a posteriori/updated state for each of the plurality of tracking data sources.

According to yet another aspect of the present invention there is provided a computing device configured to track an object, the device comprising at least one processor configured to:

obtain a plurality of estimated states and covariances relating to a tracked object and associated with a respective plurality of tracking data sources;

process the obtained plurality of estimated states and covariances using a modified Kalman filter process to generate an updated state and updated covariance, and

generate object tracking information using the updated state and updated covariance,

wherein the modified Kalman filter process comprises:
computing the updated state and the updated covariance in an update phase, wherein the computing of the updated state and the updated covariance is weighted according to relative confidence in the modified Kalman filter process and each of the plurality of tracking data sources.

The computing device may be located onboard a vehicle.
According to yet another aspect of the present invention there is provided a system configured to track an object, the system comprising a computing device configured substantially as described herein and a plurality of tracking data sources. The plurality of tracking data sources may comprise, or be in communication with, a respective plurality of sensors.
According to a further aspect of the present invention there is provided a computer readable medium, or circuit, storing a computer program to operate any method substantially as described herein.
It will be appreciated that features described in relation to one aspect of the present invention can be incorporated into other aspects of the present invention. For example, an apparatus of the invention can incorporate any of the features described in this disclosure with reference to a method, and vice versa. Moreover, additional embodiments and aspects will be apparent from the following description, drawings, and claims. As can be appreciated from the foregoing and following description, each and every feature described herein, and each and every combination of two or more of such features, and each and every combination of one or more values defining a range, are included within the present disclosure provided that the features included in such a combination are not mutually inconsistent. In addition, any feature or combination of features or any value(s) defining a range may be specifically excluded from any embodiment of the present disclosure.

BRIEF DESCRIPTION OF THE DRAWINGS

Embodiments of the invention will now be described by way of example only and with reference to the accompanying drawings:

Figure 1 is a block diagram of a computing device configurable to execute embodiments;

Figure 2 schematically illustrates components used by a system according to an example embodiment, and

Figure 3 is a flowchart showing steps performed by an example embodiment.

DETAILED DESCRIPTION

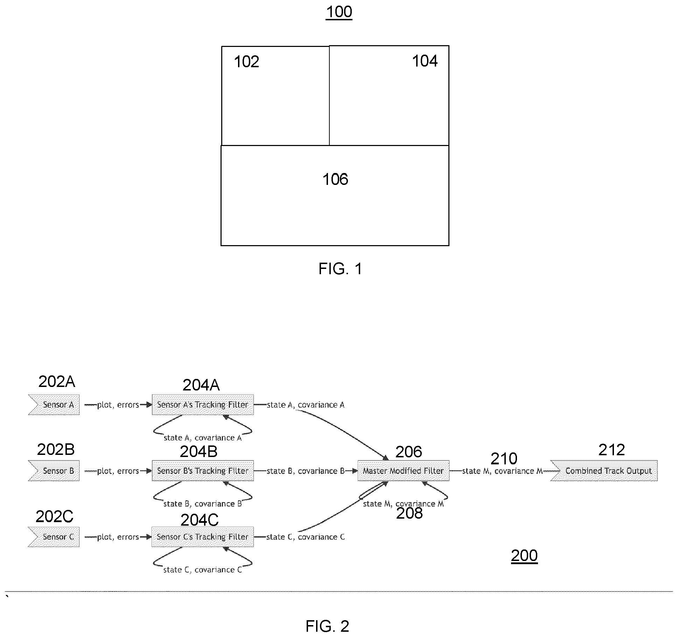

Figure 1 is a simplified block diagram of an example computing device 100 configurable to execute embodiments of the invention. The device 100 will normally comprise, or be associated with, at least one processor 102, memory 104 and a communications interface 106. The at least one processor 102 may comprise one or more of: a microprocessor, a microcontroller and an integrated circuit. The memory 104 may comprise volatile memory, such as random access memory (RAM), for use as temporary memory, and/or non-volatile memory, such as Flash, read only memory (ROM), or electrically erasable programmable ROM (EEPROM), for storing data, programs, or instructions, for example. The communications interface 106 can provide data communication between the device and other devices/components, e.g. via a wireless or wired internet connection, a cellular network connection, or the like. Other components and features of the device, such as a housing, power source/supply, display, audio output, user interface, etc, will be well-known to the skilled person and need not be described herein in detail. More than one computing device in communication with each other may be used in some embodiments. For example, one or more of the steps of the methods described herein may be performed by a remote computing device, such as a server or a cloud service, that is in communication with the device 100.

Figure 2 schematically illustrates components of an example embodiment of an object tracking system 200. The system comprises a process 206 that may comprise code being executed on a computing device, such as the device 100. In some embodiments the device may be located onboard a vehicle, such as a surface vessel or submarine. The process (sometimes termed herein the "master process") may comprise a modified version of a Kalman filter algorithm that processes input data received from a plurality of tracking data sources 204A - 204C. Each of the tracking data sources is configured to output state and corresponding covariance information related to the tracking of one or more object in an environment. Each of the tracking data sources may be associated with a respective sensor. One or more of the sensors may be located onboard the same vehicle as the device 100 or may be remote from it. The master process performs computations based on the inputs, as well as its own previously-computed state and covariance information 208, and generates/outputs updated state and covariance information 210. The updated state and covariance information can be received as input by a combined track process 212, which processes it and generates/outputs object tracking information that can be used in various ways. The combined track process 212 may be performed by the same computing device/processor that performs the process 206, or by another device/processor that has received the updated state and covariance information 210.

In the illustrated embodiment each tracking data source 204A - 204C comprises a tracking filter process. Each of the tracking filter processes 204A - 204C may receive input from a respective sensor 202A - 202C. Examples of suitable sensors include BAE Systems Sampson™ Multi-Function, Thales SMART-L™, Raytheon SPY-6™ and Saab Giraffe™ radars. The plurality of sensors may all be the same or at least one may differ from the others in at least one respect. For example, the different sensor(s) may provide a different type of output (e.g. different output frequency/timing, different level of accuracy (e.g. a numerical value to more/fewer decimal places)) and/or may perform different processing (e.g. use a different Kalman filter/similar algorithm) compared to at least one of the other sensors, and/or may comprise at least one different hardware component (e.g. a sensing device having a different resolution/accuracy/quality; a processor having higher/lower processing speed/power; a memory, e.g. RAM, of different size/access speed, etc). The sensors can provide electronic data comprising any suitable type of object tracking information, e.g. a RADAR plot including the location of the tracked object(s) and associated errors; x, y coordinates of the object(s) and estimated error, etc. Each tracking filter process may be executed by a processor included in/integrated with one of the sensors, or may executed from a processor that is separate from the sensor and in (wired or wireless) data communication with it. In some cases, one processor may receive data from more than one sensor and output separate state and covariance information for each sensor, thereby effectively functioning as more than one tracking data source.

Each of the sensors/data sources tracks the state of the object(s) under observation by using a Kalman Filter process, or a related/similar technique which may be approximated as a Kalman Filter process (e.g. Extended Kalman Filters, Unscented Kalman Filters or Particle Filters). It may be assumed that a Kalman Filter is an appropriate technique for tracking the object(s) in question. Each of the tracking data sources may output electronic data representing track state (e.g. object position and velocity) and covariance. However, alternative embodiments may include means, such as a separate device or process, that can approximate the covariance, e.g. based on reported or assumed error estimates of the data output by a sensor/data source. The assumed error estimate may be obtained, for example, based on information regarding the type of sensor used by a particular tracking data source. The reported error estimate may be obtained, for example, by comparing the state output by a particular tracking data source with the corresponding state(s) output by at least one other tracking data source. In some embodiments the covariance may be derived from error estimates by means of a state model matrix that maps from observation space to state space, e.g. from polar to Cartesian coordinates. An example of suitable formula for this is: $P_{state} = H_{state} \, P_{obs} \, H_{state}{}^T$.

In the illustrated embodiment there are three sensors 202A - 202C and three tracking data sources 204A - 204C; however, it will be appreciated that alternative embodiments can have any practical number. Further, the sensors and tracking data sources need not all operate in the same way and/or output exactly the same type of information. In such cases the master process 206 (or an intermediate component/process) may perform operations, such as data conversion or re-formatting, on the data output by the sensors/data sources so that a consistent form of data representing state and covariance is received by the master process 206.

The master process 206 can utilise a modified version of the Kalman Filter algorithm that effectively estimates the 'Kalman gain' for each of the tracking data sources 202A-202C based on the state and covariance information they provide and applies these estimates to the update steps of the algorithm to produce (combined) updated state and covariance information.

For convenience, a brief explanation of the conventional Kalman filter algorithm will now be given. Further details will be known/readily available to the skilled person; see, for example, https://en.wikipedia.org/wiki/Kalman_filter. The conventional Kalman filter algorithm is a two-phase process including a prediction phase and an update phase. The two phases typically alternate with the prediction phase advancing the state until the next observation/measurement is received, at which point the update phase is performed incorporating that observation/measurement.

In the prediction phase the Kalman filter produces estimates of the current state variables, along with their uncertainties/estimate covariance, based on prior values (the state estimate from the previous timestep) and a state-transition model. In the case of object tracking the model may represent, for example, how the movement of the object is expected to change according to physical laws of motion. This predicted state estimate is the a *priori* state estimate; it is an estimate of the state at the current timestep but does not include measurement/observation information from the current timestep.

In the case of object tracking the predicted (a *priori*) state estimate may comprise estimates of position and velocity of the tracked object. The precited (a *priori*) state estimate may be expressed mathematically as:

$$\hat{\mathbf{x}}_{k|k-1} = \mathbf{F}_k \hat{\mathbf{x}}_{k-1|k-1} + \mathbf{B}_k \mathbf{u}_{k-1}$$

Where $\mathbf{F}_k$, is the state-transition model; $\mathbf{B_k}$ is a control-input model and $\mathbf{u_k}$ is a control vector that represents the controlling input into the control-input model.

The predicted (a *priori*) covariance may comprise a measure of the estimated uncertainty of the prediction of the state and may be expressed mathematically as:

$$\mathbf{P}_{k|k-1} = \mathbf{F}_k \mathbf{P}_{k-1|k-1} \mathbf{F}_k^\mathsf{T} + \mathbf{Q}_k$$

Where $\mathbf{Q}_k$, is the covariance of the process noise.

When the next observation/measurement $\mathbf{y_k}$, which will include some error, is received, the estimates are updated in the update phase. In the update phase the innovation (the pre-fit residual), i.e. the difference between the current a *priori* prediction and the current observation information, is multiplied by the optimal Kalman gain and combined with the previous state estimate to refine the state estimate. This improved estimate based on the current observation is the a *posteriori* state estimate. The update can be performed using a weighted average, where more weight is given to estimates with greater certainty, which may be based on the covariance. For a Kalman Filter process using multiple sensors information may be fused, e.g. using a single observation step including all the sensors in a single vector, or a joint observation noise covariance matrix.

The updated (a *posteriori*) state estimate may be expressed mathematically as:

$$\hat{\mathbf{x}}_{k|k} = \hat{\mathbf{x}}_{k|k-1} + \mathbf{K}_k \tilde{\mathbf{y}}_k$$

Where $\mathbf{K_k}$ is the optimal Kalman gain.

The updated (a *posteriori*) estimated covariance may be expressed mathematically as:

$$\mathbf{P}_{k|k} = \left(\mathbf{I} - \mathbf{K}_k \mathbf{H}_k\right) \mathbf{P}_{k|k-1}$$

Where $\mathbf{H}_k$, is the observation model and I is the identity matrix.

The formula for the updated (a *posteriori*) estimate covariance above is valid for the optimal Kalman gain $\mathbf{K}_k$ that minimizes the residual error.

The following are also typically updated during the update phase:

- Innovation or measurement pre-fit residual:

$$\tilde{\mathbf{y}}_k = \mathbf{z}_k - \mathbf{H}_k \hat{\mathbf{x}}_{k|k-1}$$

- Innovation (or pre-fit residual) covariance:

$$\mathbf{S}_k = \mathbf{H}_k \mathbf{P}_{k|k-1} \mathbf{H}_k^\top + \mathbf{R}_k$$

where $\mathbf{R}_k$, is the covariance of the observation noise

- Optimal Kalman gain:

$$\mathbf{K}_k = \mathbf{P}_{k|k-1} \mathbf{H}_k^\top \mathbf{S}_k^{-1}$$

where $\mathbf{S}_k$ is the innovation covariance matrix

- Measurement post-fit residual:

$$\tilde{\mathbf{y}}_{k|k} = \mathbf{z}_k - \mathbf{H}_k \hat{\mathbf{x}}_{k|k}$$

The innovation covariance is the sum of the prediction covariance, **P**, and the measurement covariance, **R**. Both of these are represented in different frames (state frame versus measurement frame) and so **P** is rotated into the sensor frame using **H** prior to summation. The Kalman gain is the ratio of the prediction covariance (in the sensor frame) and the innovation covariance, **S**, in the sensor frame.

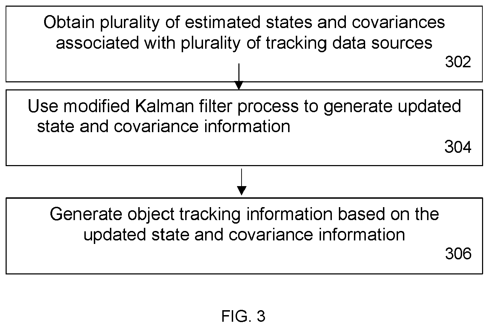

Returning to embodiments of the present invention, Figure 3 is a flowchart showing steps that may be performed by an example embodiment, e.g. by the master process 206 being executed on a computing device 100 that receives inputs from a plurality of tracking data sources 204A - 204C. It will be appreciated that at least one of the steps described herein may be re-ordered or omitted. One or more additional steps may be performed in some cases. In alternative embodiments some of the steps may be performed concurrently, possibly on different processors or cores. The method can be initiated in any suitable manner, such as an application being opened by a user or called by another process. The steps may be executed by a stand-alone object tracking application/function or may be provided as part of a multi-function application. It will also be understood that embodiments can be implemented using any suitable software, programming language, data editors, etc, and may be represented/stored/processed using any suitable data structures and formats.

At step 302 the process 206 obtains a plurality of estimated states and covariances associated with a respective plurality of tracking data sources. The plurality of estimated states and covariances will either be received in a form suitable for being directly processed by the Kalman filter-based process, or may be converted to a suitable form.

At step 304, the process 206 processes the obtained plurality of estimated states and covariances to generate updated state and covariance information. Embodiments use modified computations in the update phase of the Kalman filter process for this step, i.e. they compute the updated state and the updated covariance information (a *posteriori* estimates) using different operations/equations to those used by the conventional Kalman filter. Examples of equations that may be used by the process 206 according to a specific embodiment are given below; however, it will be understood that these are merely exemplary and that variations, including mathematically equivalent expressions or operations, etc, may be used by alternative embodiments. $\hat{x}_{k|k-1}^m, P_{k|k-1}^m$ represent the state and covariance, respectively, of the master process for the a *priori* estimates on the kth update. This extends typical notation for Kalman filter theory: the $^m$ superscript denotes the master process; $_{k|k-1}$ subscript denotes prior expectation of $k^{th}$ value given previous observation, and $_{k|k}$ subscript denotes posterior kth value given kth observation. $\hat{x}^m_{k|k}, P^m_{k|k}$ represent the state and covariance, respectively, of the master process for the *a posteriori* estimates on the kth update. $\hat{x}^i_{k|k-1}, P^i_{k|k-1}$ represent the state and covariance, respectively, of each of i = 0..N data sources for the *a priori* estimates on the kth update (the [i] superscript denotes the ith data source from a total of N data sources). $\hat{x}^i_{k|k}, P^i_{k|k}$ represent the state and covariance, respectively, of each of the i = 0..N data sources for *a posteriori* estimates on the kth update.

Embodiments may calculate the *a priori* state and covariance using the last reported (or calculated) state/position and covariance for each of the data sources and the master process by applying suitable state-transition model and process noise $F_k$, $Q_k$:

$$\hat{x}_{k|k-1} = F_k \hat{x}_{k-1|k-1}$$

$$P_{k|k-1} = F_k P_{k-1|k-1} F_k{}^T + Q_k$$

Thus, in embodiments the computations in the prediction phase may be substantially identical to those of a conventional Kalman Filter process.

The state-transition model may be an assumption of straight-line motion (also known as dead-reckoning). Alternatively, a constant acceleration under gravity or a more general ballistic model may be used; other alternatives include orbital models (e.g. for satellites), models that constrain motion to a surface (e.g. for land vehicles) and specialised models for robotics.

For a set of similar data sources each having made multiple observations, the central limit theorem sets an expectation that the state covariance (transformed to observation space) for both the master and the data sources will be much smaller in size than the covariance of a single observation itself, i.e. $\left\| H_k P^m_{k|k-1} H_k{}^T \right\| \ll \left\| R_k \right\|$ and $\left\| H_k P^i_{k|k-1} H_k{}^T \right\| \ll \left\| R_k \right\|$ where $H_k$ is the observation model for the kth update and $R_k$ is the covariance of the observation noise for the kth update. Therefore, the Innovation Covariance for the master process and the tracking data sources will be similar and it is possible to derive approximations for the master state and covariance in terms of the reported data sources' states and covariance as if the master process had directly consumed the observations provided by the tracking data sources; that is, the master process is an approximation of a theoretical Kalman Filter that directly processes all the observations from all the tracking data sources, noting that these sources may not make the observations available directly.

The master process *a posteriori* state update may use the following equation:

$$\hat{x}^m_{k|k} \approx \hat{x}^m_{k|k-1} + P^m_{k|k-1}\left(P^i_{k|k-1}\right)^{-1}\left(\hat{x}^i_{k|k} - \hat{x}^i_{k|k-1}\right)$$

$$+ P^m_{k|k-1}\left(P^i_{k|k-1}\right)^{-1}\left(I - P^i_{k|k}\left(P^i_{k|k-1}\right)^{-1}\right)\left(\hat{x}^i_{k|k-1} - \hat{x}^m_{k|k-1}\right)$$

This can be understood as the posterior state $\hat{x}^m_{k|k}$ being adjusted from the prior expectation $\hat{x}^m_{k|k-1}$ according to two terms:

• The first term is proportional to the adjustment between the tracking data sources' prior and posterior states ( $\hat{x}^i_{k|k} - \hat{x}^i_{k|k-1}$ ); the expression weights this term by the confidence in the tracking data source state $P^i_{k|k-1}$ in comparison to the master state $P^m_{k|k-1}$ (i.e. the inverse of the covariance of the tracking data source state).

• The second term is proportional to the prior difference between the tracking data sources' state and the master state (

$$\hat{x}^i_{k|k-1} - \hat{x}^m_{k|k-1}$$ ); the expression also weights this term by the confidence in the tracking data source state in comparison to the master state (i.e. the inverse $P^m_{k|k-1}\left(P^i_{k|k-1}\right)^{-1}$ of the covariance) and an additional factor relating to the change (from the prior to the posterior) in confidence in the tracking data source's state (

$$I - P^i_{k|k}\left(P^i_{k|k-1}\right)^{-1}$$ ).

The master process a *posteriori* covariance update may use the following equation:

$$P^m_{k|k} \approx \left(I - P^m_{k|k-1}\left(P^i_{k|k-1}\right)^{-1}\left(I - P^i_{k|k}\left(P^i_{k|k-1}\right)^{-1}\right)\right)P^m_{k|k-1}$$

This can be understood as the posterior covariance $P^m_{k|k}$ being adjusted from the prior expectation $P^m_{k|k-1}$ according to two weights:

- The first weight relates to the relative confidence between the master and tracking data source

$$I - P^m_{k|k-1}\left(P^i_{k|k-1}\right)^{-1}$$ .

- The second weight relates to the change (from the prior to the posterior) in confidence for the tracking data source (*I* -

$$P^i_{k|k}\left(P^i_{k|k-1}\right)^{-1}$$ ).

At step 306 the updated state and covariance information can processed (e.g. by combined track process 212) to generate/output object tracking information that can be used in various ways. Examples of algorithms that can use the output object tracking information include 'closest point of approach', 'threat evaluation' and 'weapon assignment' algorithms. For instance, the object tracking information may be used to generate a graphical display showing the position, velocity, etc, of the tracked object, which may be updated substantially in real time. The object tracking information may be used for other purposes, such as guiding another object or vehicle towards the tracked object. In other cases it may be used to generate control signals for a fully/partially autonomous vehicle.

Terms such as 'component', 'module', 'processor' or 'unit' used herein may include, but are not limited to, a hardware device, such as circuitry in the form of discrete or integrated components, general processing units (GPUs), a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements.

Where, in the foregoing description, integers or elements are mentioned that have known, obvious, or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional do not limit the scope of the independent claims. Moreover, it is to be understood that such optional integers or features, while of possible benefit in some embodiments of the disclosure, may not be desirable, and can therefore be absent, in other embodiments.

**Claims**

1. A computer-implemented method of tracking an object comprising:

   obtaining (302) a plurality of estimated states and covariances relating to a tracked object and associated with a respective plurality of tracking data sources;
   processing (304) the obtained plurality of estimated states and covariances using a modified Kalman filter process to generate an updated state and updated covariance, and
   generating (306) object tracking information using the updated state and updated covariance,
   wherein the modified Kalman filter process comprises:
   computing the updated state and the updated covariance in an update phase, wherein the computing of the updated state and the updated covariance is weighted according to relative confidence in the modified Kalman filter process and each of the plurality of tracking data sources.

2. A method according to claim 1, wherein the modified Kalman filter process comprises an approximation of a theoretical Kalman Filter that directly processes the obtained plurality of estimated states and covariances, wherein the modified Kalman filter process further comprises computing a Kalman gain value comprising a difference between an a *priori* state and an a *posteriori* state for each of the plurality of tracking data sources.

3. A method according to claim 1 or 2, wherein the modified Kalman filter process comprises computing an a *priori* state and an a *priori* covariance in a prediction phase for each of the plurality of tracking data sources, and a current estimated state and current covariance of the modified Kalman filter process.

4. A method according to claim 3, further comprising applying a state-transition model and process noise in the prediction phase, wherein the state-transition model comprises an assumption of straight-line motion of the tracked object.

5. A method according to claim 3 or 4, wherein the computing the updated state comprises adjusting the a *priori* state based on a first term and a second term,

   wherein the first term is proportional to an adjustment between the a *priori* state and the updated state of the obtained plurality of estimated states, and wherein the first term is weighted by confidence in the obtained plurality of estimated states compared to the a *priori* state of the modified Kalman filter process, and
   wherein the second term is proportional to a difference between the obtained plurality of estimated states and the a *priori* state of the modified Kalman filter process, and the second term is weighted by confidence in the obtained plurality of estimated states compared to the a *priori* state of the modified Kalman filter process and an additional factor relating to confidence in change from the a *priori* state to the updated state of the obtained plurality of estimated states.

6. A method according to any of claims 3 to 5, wherein the computing the updated state uses an equation:

$$\hat{x}_{k|k}^m \approx \hat{x}_{k|k-1}^m + P_{k|k-1}^m \left(P_{k|k-1}^i\right)^{-1}\left(\hat{x}_{k|k}^i - \hat{x}_{k|k-1}^i\right) + P_{k|k-1}^m \left(P_{k|k-1}^i\right)^{-1}\left(I - \right.$$

$$\left. P_{k|k}^i \left(P_{k|k-1}^i\right)^{-1}\right)\left(\hat{x}_{k|k-1}^i - \hat{x}_{k|k-1}^m\right),$$

wherein:

$\hat{x}_{k|k-1}^m, P_{k|k-1}^m$ represent state and covariance, respectively, of the modified Kalman filter process for a *priori* estimates on a $k^{th}$ update;

$\hat{x}_{k|k}^m, P_{k|k}^m$ represent state and covariance, respectively, of the modified Kalman filter process for the a posteriori/updated estimates on the $k^{th}$ update;

$\hat{x}_{k|k-1}^i, P_{k|k-1}^i$ represent state and covariance, respectively, of each of i = 0..N tracking data sources for a *priori* estimates on the $k^{th}$ update;

$\hat{x}^i_{k|k}, P^i_{k|k}$ represent state and covariance, respectively, of each of the i = 0..N data sources for a *posteriori* estimates on the kth update, and

I represents an identity matrix.

7. A method according to any of claims 3 to 6, wherein the computing the updated covariance comprises the updated covariance being computed by adjusting the a *priori* covariance of the modified Kalman filter process according to a first weight and a second weight,

wherein the first weight relates to relative confidence between the plurality of obtained covariances and the a *priori* covariance of the modified Kalman filter process, and
wherein the second weight relates to confidence in change from the a *priori* state to the updated state of the obtained plurality of estimated states.

8. A method according to claim 6, wherein the computing the updated covariance uses an equation

$$P^m_{k|k} \approx \left( I - P^m_{k|k-1} \left( P^i_{k|k-1} \right)^{-1} \left( I - P^i_{k|k} \left( P^i_{k|k-1} \right)^{-1} \right) \right) P^m_{k|k-1} \; .$$

9. A method according to any preceding claim, wherein the plurality of estimated states and covariances are associated with the respective plurality of tracking data sources by being generated directly or indirectly from data output by the tracking data sources.

10. A method according to claim 9, wherein at least one of the plurality of tracking data sources does not directly output the covariance, and wherein the method further comprises approximating the covariance obtained from the at least one tracking data source based on a reported or assumed error estimate of the at least one tracking data source.

11. A computer readable medium, or circuit, storing a computer program to operate a method according to any of claims 1 to 10.

12. A computing device (100) configured to track an object, the device comprising at least one processor (102) configured to:

obtain a plurality of estimated states and covariances relating to a tracked object and associated with a respective plurality of tracking data sources;
process the obtained plurality of estimated states and covariances using a modified Kalman filter process to generate an updated state and updated covariance, and
generate object tracking information using the updated state and updated covariance,
wherein the modified Kalman filter process comprises:
computing the updated state and the updated covariance in an update phase, wherein the computing of the updated state and the updated covariance is weighted according to relative confidence in the modified Kalman filter process and each of the plurality of tracking data sources.

13. A computing device according to claim 12, wherein the computing device is located onboard a vehicle.

14. A system configured to track an object, the system comprising a computing device (206) according to claim 12 and a plurality of tracking data sources (204A - 204C).

15. A system according to claim 14, wherein the plurality of tracking data sources (204A - 204C) comprise, or are in communication with, a respective plurality of sensors (202A - 202C).

<u>100</u>

| 102 | 104 |
|---|---|
| 106 | |

FIG. 1

**202A**       **204A**

Sensor A ──plot, errors──▶ Sensor A's Tracking Filter ──state A, covariance A

state A, covariance A

**202B**      **204B**      **206**      **210**      **212**

Sensor B ──plot, errors──▶ Sensor B's Tracking Filter ──state B, covariance B──▶ Master Modified Filter ──state M, covariance M──▶ Combined Track Output

state B, covariance B

**202C**      **204C**      state M, covariance M    **208**

Sensor C ──plot, errors──▶ Sensor C's Tracking Filter ──state C, covariance C

state C, covariance C

<u>200</u>

FIG. 2

Obtain plurality of estimated states and covariances
associated with plurality of tracking data sources

302

Use modified Kalman filter process to generate updated
state and covariance information

304

Generate object tracking information based on the
updated state and covariance information

306

FIG. 3

# EUROPEAN SEARCH REPORT

**Application Number**

EP 24 27 5054

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HONGYAN SUN ET AL: "A study on an algorithm of multisensor data fusion", AEROSPACE AND ELECTRONICS CONFERENCE, 1994. NAECON 1994., PROCEEDINGS OF THE IEEE 1994 NATIONAL DAYTON, OH, USA 23-27 MAY 1994, NEW YORK, NY, USA,IEEE, 23 May 1994 (1994-05-23), pages 239-245, XP010122401, DOI: 10.1109/NAECON.1994.332999 ISBN: 978-0-7803-1893-9 | 1-4,9-15 | INV. G01S7/00 G01S13/72 G01S13/87 G01S13/931 |
| A | * page 240, left-hand column, line 43 - page 241, left-hand column, line 9 * * page 241, right-hand column, line 1 - line 6 * * page 242, left-hand column, line 6 - right-hand column, line 15 * * figures 1-6 * | 5-8 | |
| X | PUCAR P ET AL: "Decentralized sensor fusion and support using multiple models", 19970101, vol. 3068, 1 January 1997 (1997-01-01), pages 20-31, XP002407865, DOI: 10.1117/12.280813 | 1-4,9-15 | |
| A | * page 21, line 4 - line 9 * * page 21, line 37 - line 41 * * page 22, line 7 - line 9 * * page 22, line 18 - page 23, line 27 * * figures 1-10 * | 5-8 | |

**TECHNICAL FIELDS SEARCHED (IPC)**

G01S

The present search report has been drawn up for all claims

| Place of search | Date of completion of the search | Examiner |
|---|---|---|
| Munich | 18 October 2024 | Köppe, Maro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)